# EUROPEAN PATENT APPLICATION

(11) **EP 2 541 032 A1**
(43) Date of publication of application: **02.01.2013**
(21) Application number: 12173991.6
(22) Date of filing: 28.06.2012
(51) Int. Cl.: F02M 25/07, F16K 1/22, F16K 1/228, F16K 27/02

(54) **Exhaust gas recirculation valve for internal combustion engine**

(30) Priority: 29.06.2011 US 201113172504
(71) Applicant: CATERPILLAR INC., Peoria IL 61629-6490 (US)
(72) Inventor: Heisel, Amanda, Hanna City, IL Illinois 61536 (US); Atkinson, David, Dunlap, IL Illinois 61525 (US); Johnston, Brien, Peoria, IL Illinois 61615 (US)
(74) Representative: Kramer - Barske - Schmidtchen

(57) **Abstract**

An exhaust gas recirculation valve (70) is configured as a butterfly valve and includes a body (71) with a generally uniform diameter bore (72) therethrough. A generally circular plate (74) is mounted within the bore (72) and is rotatable between a first open position and a second closed position. The generally circular plate (74) is dimensioned to provide a enlarged gap (80) between an outer edge (79) of the generally circular plate (74) and the bore (72) when at the second closed position.

## Description

### Technical Field

This disclosure relates generally to an internal combustion engine with an exhaust gas recirculation system and, more particularly, to an exhaust gas recirculation control valve for such a system.

### Background

An exhaust gas recirculation system may be used to reduce the generation of undesirable pollutant gases during the operation of internal combustion engines. Exhaust gas recirculation systems generally recirculate exhaust gas generated during the combustion process into the intake air supply of the internal combustion engine. The exhaust gas introduced into the engine cylinders displaces a volume of the intake air supply that would otherwise be available for oxygen. Reduced oxygen concentrations lower the maximum combustion temperatures within the cylinders, which decreases the formation of oxides of nitrogen (NOₓ).

An internal combustion engine having an exhaust gas recirculation system will typically include an exhaust gas recirculation control valve for controlling the amount of exhaust gas that passes through the exhaust gas recirculation system. Different types of valves may be used for the exhaust gas recirculation control valve including butterfly valves and poppet valves.

U.S. Patent No. 6,698,717 discloses a butterfly valve for use with an internal combustion engine having an exhaust gas recirculation system. The bore of the butterfly valve is configured to improve gas flow control sensitivity and to reduce or eliminate the unwanted passage of exhaust gas through the valve.

The foregoing background discussion is intended solely to aid the reader. It is not intended to limit the innovations described herein nor to limit or expand the prior art discussed. Thus the foregoing discussion should not be taken to indicate that any particular element of a prior system is unsuitable for use with the innovations described herein, nor is it intended to indicate any element, including solving the motivating problem, to be essential in implementing the innovations described herein. The implementations and application of the innovations described herein are defined by the appended claims.

### Summary

An internal combustion engine having an exhaust gas recirculation system is provided. In one aspect, an exhaust gas recirculation system includes an exhaust gas recirculation control valve configured as a butterfly valve. The butterfly valve includes a body with a generally uniform diameter bore therethrough. A shaft is rotatably mounted on the body and a generally circular plate is mounted on the shaft and within the bore. The generally circular plate restricts flow of exhaust gas through the bore and is rotatable between a first open position at which flow through the bore is substantially unrestricted by the generally circular plate and a second closed position at which flow through the bore is substantially blocked. The generally circular plate is dimensioned to provide a gap between an outer edge of the generally circular plate and the bore when the generally circular plate is at the second closed position. The gap has a width of between approximately 0.18 mm and 0.38 mm.

In another aspect, the internal combustion engine has a plurality of combustion cylinders and an intake air system for supplying air to the combustion cylinders. An exhaust gas system is fluidly connected to the combustion cylinders for transporting exhaust gas from the combustion cylinders. A turbocharger may be fluidly connected to the exhaust gas system. An exhaust gas recirculation system is provided for recirculating exhaust gas from the exhaust gas system to the intake air system. The exhaust gas recirculation system includes an exhaust gas recirculation control valve for controlling flow of exhaust gas from the exhaust gas system to the intake air system. The exhaust gas recirculation control valve is configured as a butterfly valve. The butterfly valve includes a body with a generally uniform diameter bore therethrough. A shaft is rotatably mounted on the body and a generally circular plate is mounted on the shaft and within the bore. The generally circular plate restricts flow of exhaust gas through the bore and is rotatable between a first open position at which flow through the bore is substantially unrestricted by the generally circular plate and a second closed position at which flow through the bore is substantially blocked. The generally circular plate is dimensioned to provide a gap between an outer edge of the generally circular plate and the bore when the generally circular plate is at the second closed position. The gap has a width of between approximately 0.18 mm and 0.38 mm.

### Brief Description of the Drawings

Fig. 1 is a schematic illustration of an internal combustion engine in accordance with the disclosure;
Fig. 2 is an end view of an exhaust gas recirculation control valve in accordance with the disclosure;
Fig. 3 is an enlarged view of the rectangle labeled 3-3 in Fig. 2;
   and
Fig. 4 perspective view with the valve body in section taken generally along line 4-4 of Fig. 2.

### Detailed Description

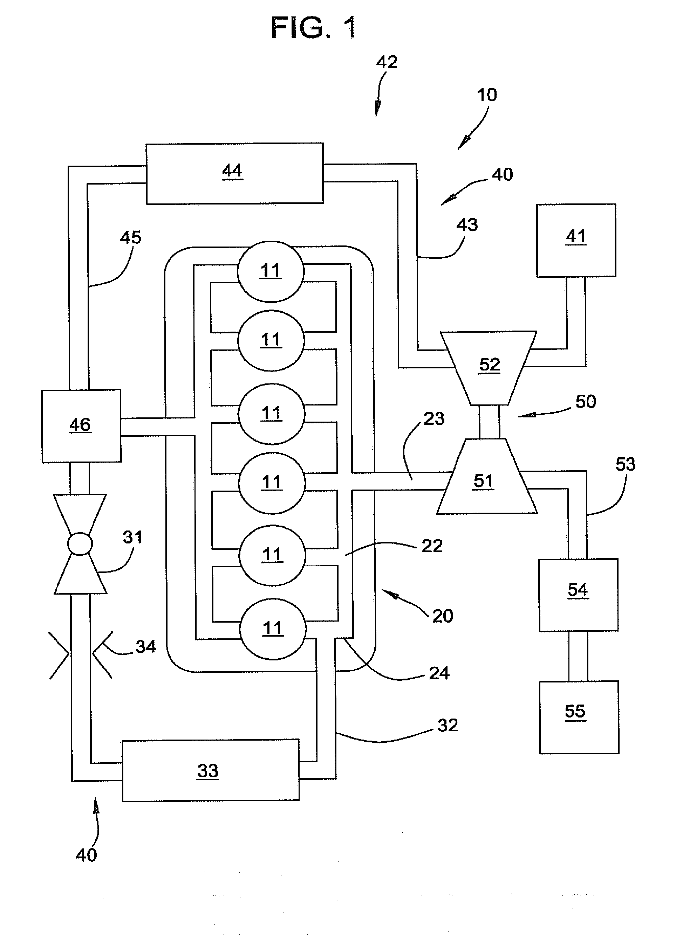

Fig. 1 depicts an internal combustion engine 10 having a plurality of combustion cylinders 11. An exhaust gas system 20 is fluidly connected to the combustion cylinders 11 for transporting exhaust gas from the combustion cylinders. Compressed air is supplied to the combustion cylinders 11 by an intake air system 40. An exhaust gas recirculation system 30 provides for the recirculation of the exhausts gas into the intake air system 40 in order to reduce the emissions of the internal combustion engine 10.

Exhaust gas system 20 includes an exhaust manifold 22 that is fluidly connected to the combustion cylinders 11. Exhaust manifold 22 has an extension pipe 23 that extends generally from a mid-section of the exhaust manifold and is fluidly connected to the turbine section 51 of turbocharger 50. Exhaust gas from the combustion cylinders 11 is received within the exhaust manifold 22 and, depending upon the position of the exhaust gas recirculation control valve 31, may be routed through the exhaust gas recirculation system 30. After the exhaust gas from the combustion cylinders 11 passes through the turbocharger 50, it exits the turbocharger through a turbocharger exhaust gas line 53. The turbocharger exhaust gas line 53 is fluidly connected to an exhaust aftertreatment system such as a diesel particulate filter 54 so that the exhaust gas is filtered prior to being discharged or released to the atmosphere through an exhaust gas outlet 55.

The exhaust gas recirculation system 30 includes an exhaust gas recirculation duct 32 that is fluidly connected to an end 24 of the exhaust gas manifold so that exhaust gas from the combustion cylinders 11 may be routed or recirculated through the exhaust gas recirculation system 30 and introduced into the intake air system 40. Exhaust gas passing through exhaust gas recirculation duct 32 is cooled by an exhaust gas recirculation cooler 33. The flow rate through the exhaust gas recirculation duct 32 is monitored by a flow meter 34 such as a venturi-style meter. An exhaust gas recirculation control valve 31 is provided along exhaust gas recirculation duct 32 upstream of air exhaust gas mixer 46 to control exhaust gas flow through the exhaust gas recirculation system 30. The exhaust gas recirculation system 30 is considered a high pressure system or loop as it extracts exhaust gas at its highest pressure, which is upstream of turbine 51.

Intake air system 40 includes an air intake 41 through which atmospheric air enters the compressor section 52 of the turbocharger 50 and a compressed air line 42 through which compressed air is fed to the combustion cylinders 11. Atmospheric air is compressed by the turbocharger 50 and passes through a first compressed air line 43 to aftercooler 44. Cooled compressed air exits the aftercooler 44 and enters a second compressed air line 45. The second compressed air line 45 delivers cooled compressed air to an air exhaust gas mixer 46 which is fluidly connected to intake manifold 47. Exhaust gas recirculation duct 32 downstream of the exhaust gas recirculation control valve 31 is fluidly connected to the air exhaust gas mixer 46. Compressed air is mixed with a desired amount of exhaust gas within the air exhaust gas mixer 46 to provide the desired mixture of intake air and exhaust gas to the combustion cylinders 11.

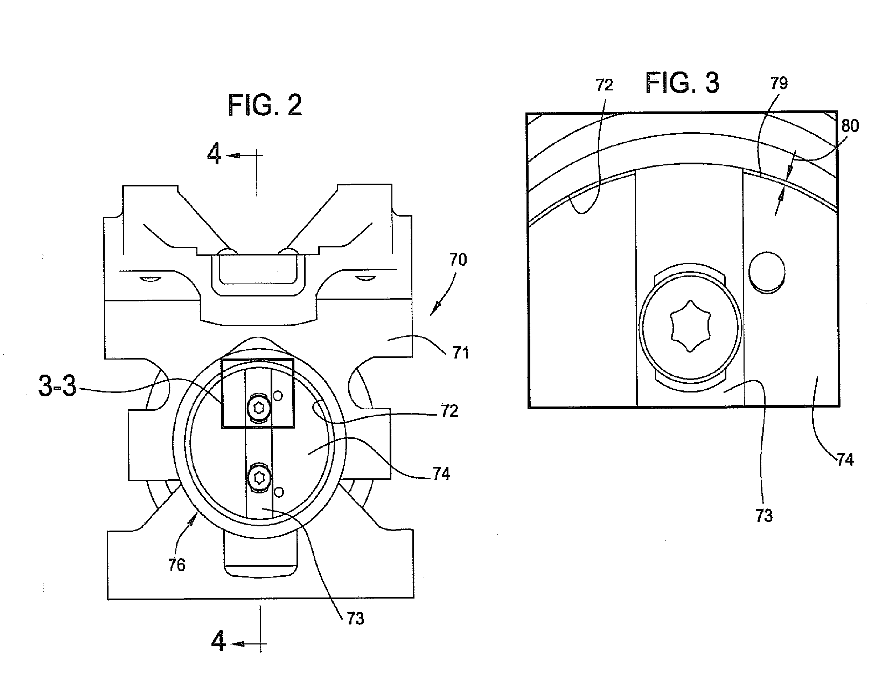

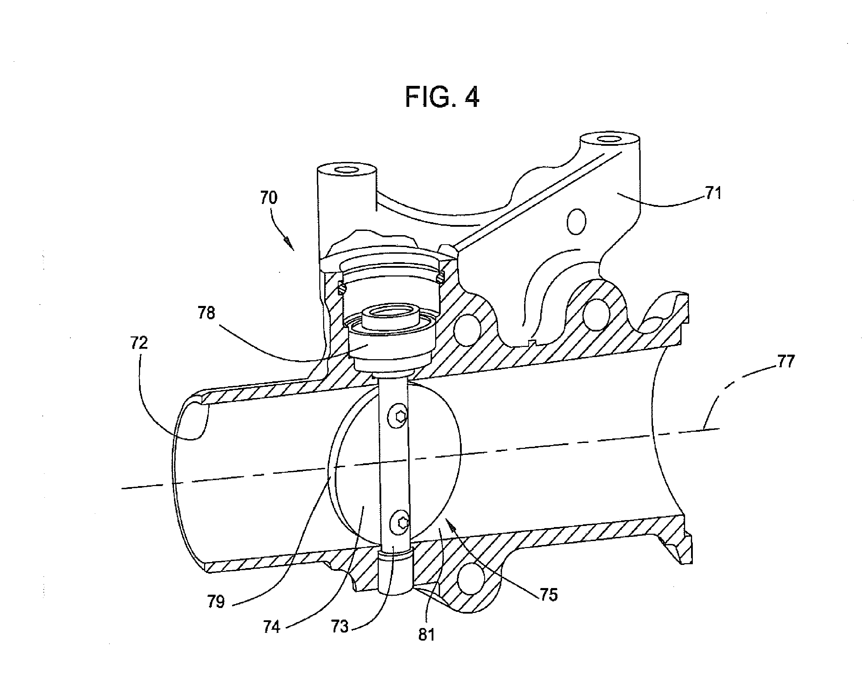

Exhaust gas recirculation control valve 31 is configured as a butterfly valve 70 and is positioned along the exhaust gas recirculation duct 32 between the flow meter 34 and the air exhaust gas mixer 46. Referring to Figs. 2-4, exhaust gas recirculation control valve 31 includes a valve housing or body 71 with a cylindrical bore 72 through which exhaust gas may flow. Bore 72 is formed with a generally uniform or constant diameter. A stem or shaft 73 is rotatably mounted on the body 71 and extends diametrically through the center of the bore 72. A valve member in the form of a generally circular plate 74 is mounted on the shaft 73 and is dimensioned to fit within the bore 72.

The assembly of the shaft 73 and the generally circular plate 74 is configured so as to be moveable or rotatable within the bore 72 between a first open position 75 and a second closed position 76. At the first open position, the generally circular plate 74 is positioned generally parallel to the direction of flow of exhaust gas through bore 72 so that flow through the bore is substantially unrestricted. At the second closed position 76, the generally circular plate 74 is positioned generally perpendicular to the direction of flow of exhaust gas through the bore 72 and is generally perpendicular to an axis 77 extending through the bore. By positioning the generally circular plate 74 across the bore 72, flow of exhaust gas through the bore is substantially blocked. An actuator 78 is connected to the shaft 73 in order to control rotation of the shaft and thus the position of the generally circular plate 74 across the bore 72. The actuator may be controlled and driven by any means including electrical, gear, lever, hydraulic or pneumatic.

Although the generally circular plate 74 may be positioned at any orientation relative to axis 77 of bore 72, significant issues may arise when the generally circular plate is at the second closed position 76 due to the build-up of particulate matter and the affects of corrosive compounds from the exhaust gas. The components of the exhaust gas recirculation control valve 31 disclosed herein are configured to reduce the build-up of particulate matter on the components which may result in sticking or binding of the generally circular plate 74 at the second closed position 76. More specifically, the diameter of generally circular plate 74 is reduced relative to the inside diameter of bore 72 in order to provide a gap 80 or clearance between the bore 72 and the outer edge 79 of the generally circular plate 74 when the generally circular plate is at the second closed position 76 as best seen in in Figs. 3-4. When the generally circular plate is at the second closed position, the uniform diameter of bore 72 adjacent generally circular plate 74 creates a straight, generally uniform flow path through the gap 80. As compared to conventional butterfly valves which are typically designed to minimize the gap 80, the gap between the bore 72 and the generally circular plate 74 permits increased exhaust gas flow through the gap and also creates a larger distance that the particulate matter and corrosive compounds must span before the bore 72 and the generally circular plate 74 will stick or bind. Generally circular plate is configured so that the width of the gap is generally uniform around the circumference thereof.

The materials of the bore 72 and the generally circular plate 74 also reduce the likelihood that particulate matter and corrosive compounds will adhere to either the bore 72 or the generally circular plate 74. More particularly, the body 71 of butterfly valve 70 may be formed of aluminum in order to reduce weight and may be coated with a protective material such as an adhesion resistant coating 81. Such a material or coating 81 may be resistant to adhesion by the particulate matter within the exhaust gas and also protect the bore 72 from the corrosive effects of compounds within the exhaust gas such as sulfuric acid while being capable of withstanding the heat of the exhaust gas. One example of such a protective coating is one made of a phenolic material. Other examples of materials that may be used include polytetrafluoroethylene, certain thermoset resins and other materials having similar characteristics. In the alternative, the body 71 may be formed of stainless steel, which is less likely to corrode, but is substantially heavier than aluminum and is more costly to machine. In order to reduce the likelihood of corrosion due to compounds within the exhaust gas and reduce the likelihood that particulate matter and corrosive compounds will adhere to generally circular plate 74, the generally circular plate may be formed of stainless steel. By increasing the size of the gap 80 between the bore 72 and the outer edge 79 of the generally circular plate 74 as well as by forming the body 71 (and thus bore 72) and generally circular plate 74 of materials that are resistant to corrosive compounds and adhesion by particulate matter and corrosive compounds, the likelihood that the butterfly valve 70 will stick or bind at the second closed position 76 is reduced.

In one example, a butterfly valve 70 was manufactured with a bore 72 having a diameter of approximately 45 mm and a gap 80 having a width of 0.254 mm. It is believed that the width of the gap 80 may range between approximately 0.2 and 0.3 mm while still achieving satisfactory results. Further, it is believed that, under some circumstances, a gap of between approximately 0.18 mm and 0.76 mm may also provide satisfactory results. A gap of 0.254 mm has also been successfully used with another butterfly valve having a bore 72 with a diameter of approximately 60 mm. It is believed that the dimensions of the gap 80 specified above will provide satisfactory results for a wide range of bores 72 including a range of between approximately 30 mm and 80 mm.

The gap 80 as described herein is significantly larger than the gap of 0.076 mm used with certain conventional butterfly valves. The increase in the width of the gap increases the flow of exhaust gas through bore 72 and around generally circular plate 74 when the generally circular plate is at the second closed position 76. While increasing the width of the gap does degrade the sealing capabilities of the exhaust gas recirculation control valve 31 and thus increases the flow of exhaust gas through the exhaust gas recirculation system 30, the combustion system and other systems may be configured to compensate for the increased flow of exhaust gas through the exhaust gas recirculation system.

Although internal combustion engine 10 depicted in Fig. 1 includes a single cylinder bank, the features disclosed herein may also be used with internal combustion engines having more than one cylinder bank.

### Industrial Applicability

The industrial applicability of the system described herein will be readily appreciated from the foregoing discussion. The present disclosure is applicable to internal combustion engines 10 that utilize an exhaust gas recirculation system 30 and an exhaust gas recirculation control valve 31. In one aspect, an exhaust gas recirculation system 30 includes an exhaust gas recirculation control valve 31 configured as a butterfly valve 70. The butterfly valve 70 includes a body 71 with a generally uniform diameter bore 72 therethrough. A shaft 73 is rotatably mounted on the body 71 and a generally circular plate 74 is mounted on the shaft and within the bore 72. The generally circular plate 74 restricts flow of exhaust gas through the bore 72 and is rotatable between a first open position 75 at which flow through the bore 72 is substantially unrestricted by the generally circular plate and a second closed position 76 at which flow through the bore is substantially blocked. The generally circular plate 74 is dimensioned to provide a gap 80 between an outer edge 79 of the generally circular plate 74 and the bore 72 when the generally circular plate is at the second closed position 76. The gap 80 has a width of between approximately 0.18 mm and 0.38 mm.

In another aspect, the internal combustion engine 10 has a plurality of combustion cylinders 11 and an intake air system 40 for supplying air to the combustion cylinders. An exhaust gas system 20 is fluidly connected to the combustion cylinders 11 for transporting exhaust gas from the combustion cylinders. A turbocharger 50 may be fluidly connected to the exhaust gas system 20. An exhaust gas recirculation system 30 is provided for recirculating exhaust gas from the exhaust gas system to the intake air system 40. The exhaust gas recirculation system 30 includes an exhaust gas recirculation control valve 31 for controlling flow of exhaust gas from the exhaust gas system to the intake air system. The exhaust gas recirculation control valve is configured as a butterfly valve 70. The butterfly valve 70 includes a body 71 with a generally uniform diameter bore 72 therethrough. A shaft 73 is rotatably mounted on the body 71 and a generally circular plate 74 is mounted on the shaft and within the bore 72. The generally circular plate 74 restricts flow of exhaust gas through the bore 72 and is rotatable between a first open position 75 at which flow through the bore 72 is substantially unrestricted by the generally circular plate 74 and a second closed position 76 at which flow through the bore is substantially blocked. The generally circular plate 74 is dimensioned to provide a gap 80 between an outer edge of the generally circular plate and the bore 72 when the generally circular plate is at the second closed position 76. The gap 80 has a width of between approximately 0.18 mm and 0.38 mm.

It will be appreciated that the foregoing description provides examples of the disclosed system and technique. However, it is contemplated that other implementations of the disclosure may differ in detail from the foregoing examples. All references to the disclosure or examples thereof are intended to reference the particular example being discussed at that point and are not intended to imply any limitation as to the scope of the disclosure more generally. All language of distinction and disparagement with respect to certain features is intended to indicate a lack of preference for those features, but not to exclude such from the scope of the disclosure entirely unless otherwise indicated.

Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

## Claims

1. A exhaust gas recirculation control butterfly valve (70) comprising:
a body (71) with a bore (72) therethrough, the bore having a generally uniform diameter;
a shaft (73) rotatably mounted on the body (71);
a generally circular plate (74) mounted on the shaft (73) and within the bore (72) for restricting flow of exhaust gas through the bore, the generally circular plate being rotatable between a first open position (75) at which flow through the bore is substantially unrestricted by the generally circular plate and a second closed position (76) at which flow through the bore is substantially blocked; and
the generally circular plate (74) being dimensioned to provide a gap (80) between an outer edge (79) of the generally circular plate and the bore (72) when the generally circular plate is at the second closed position (76), the gap (80) having a width of between approximately 0.18 mm and 0.76 mm.

2. The exhaust gas recirculation control butterfly valve (70) butterfly valve (70) of claim 1 wherein the bore (72) includes a coating (81) to resist adhesion of particulate matter and corrosion from the exhaust gas and the generally circular plate (74) is formed of stainless steel.

3. The exhaust gas recirculation control butterfly valve (70) of any of claims 1-2, wherein the body (71) is formed of aluminum.

4. The exhaust gas recirculation control butterfly valve (70) of any of claims 1-3 wherein the bore (72) includes a phenolic coating thereon.

5. The exhaust gas recirculation control butterfly valve (70) of any of claims 1-4, wherein the width of the gap (80) is between approximately 0.2 mm and 0.3 mm.

6. The exhaust gas recirculation control butterfly valve (70) of any of claims 1-5, wherein the width of the gap (80) is approximately 0.25 mm.

7. The exhaust gas recirculation control butterfly valve (70) of any of claims 1-6, wherein the generally circular plate (74) has a circumference and the width of the gap (80) is generally uniform around the circumference.

8. The exhaust gas recirculation control butterfly valve (70) of any of claims 1-7, wherein the butterfly valve (70) is configured to be hydraulically actuated.

9. An internal combustion engine 10 comprising the exhaust gas recirculation control butterfly valve (70) of any of claims 1-8.

10. The internal combustion engine of claim 10, wherein the exhaust gas recirculation control butterfly valve (70) is positioned between an exhaust gas recirculation cooler (33) and an air exhaust gas mixer (46).
